# EUROPÄISCHE PATENTSCHRIFT

(11) **EP 1 429 343 B1**
(45) Veröffentlichungstag und Bekanntmachung des Hinweises auf die Patenterteilung: **06.01.2010**
(21) Anmeldenummer: 03021849.9
(22) Anmeldetag: 26.09.2003
(51) Int. Cl.: G21C 9/012

(54) **Sicherheitsbehälter einer Kernkraftanlage**
Safety confinement of a nuclear power plant
Enceinte de securité d'une centrale nucléaire

(30) Priorität: 12.12.2002 DE 10258354
(43) Veröffentlichungstag der Anmeldung: 16.06.2004
(73) Patentinhaber: AREVA NP GmbH, 91052 Erlangen (DE)
(72) Erfinder: Meseth, Johann, Dr. rer. nat., 64807 Dieburg (DE)
(74) Vertreter: Walkenhorst, Andreas

(56) Entgegenhaltungen:
- DE-A- 2 303 261
- DE-A- 2 618 108
- JP-A- 55 031 903
- JP-A- 2000 292 578

## Beschreibung

Aus der DE 198 09 000 C1 ist ein innovatives Bau- und Sicherheitskonzept für einen Siedewasserreaktor bekannt. Bei dem darin beschriebenen Siedewasserreaktor ist der Reaktordruckbehälter zentral in einem Sicherheitsbehälter angeordnet. Zur Notkühlung des Siedewasserreaktors sind neben dem Reaktordruckbehälter eine abgeschlossene Kondensationskammer und ein darüber angeordnetes Flutbecken vorgesehen. Dieses ist zu einem zentralen Bereich hin offen, in welchem der Reaktordruckbehälter angeordnet ist und bildet mit diesem eine Druckkammer. Oberhalb des Flutbeckens, d.h. im oberen Bereich der Druckkammer bzw. des Sicherheitsbehälters ist ein sogenannter Gebäudekondensator angeordnet. Der Gebäudekondensator steht mit einer Kühlflüssigkeit aus einem oberhalb des Sicherheitsbehälters angeordneten Kühlbecken in Verbindung und dient zur Abfuhr der Wärme aus der Druckkammer.

Der Wirkungsgrad des Gebäudekondensators reagiert empfindlich auf die Anwesenheit von nicht-kondensierbaren Gasen, wie Stickstoff oder Wasserstoff, wobei letzterer besonders bei extremen Störfällen entstehen kann. Die nicht-kondensierbaren Gase verringern nämlich die Fähigkeit des Gebäudekondensators, Wärme von in der Druckkammer eventuell vorhandenem Dampf in das Kühlbecken abzuführen. Wasserstoff reichert sich aufgrund seines geringen spezifischen Gewichts im oberen Bereich der Druckkammer an, so dass gerade in der Umgebung des Gebäudekondensators eine hohe Konzentration von nicht-kondensierbaren Gasen vorliegen kann, die zu einer Druckerhöhung im Sicherheitsbehälter führt.

Zur Wärmeabfuhr aus der Druckkammer bei einem Störfall, d.h. zur Abfuhr von nicht-kondensierbaren Gasen aus der Druckkammer, sind Konzepte bekannt, bei denen die Druckkammer über Kondensationsrohre mit einer Kondensationskammer verbunden ist. Über diese Kondensationsrohre gelangt der bei einem Störfall in der Druckkammer befindliche Dampf zusammen mit den nicht-kondensierbaren Gasen in die Kondensationskammer. Da die Kondensationsrohre in der Regel mehrere Meter tief in die Kühlflüssigkeit in der Kondensationskammer eintauchen, kondensiert der Dampf und nur die mitgeführten Anteile der nicht-kondensierbaren Gase verbleiben in der Kondensationskammer.

Ein derartiges System ist zum Beispiel aus der DE 198 09 000 C1 bekannt. Der in dieser Druckschrift beschriebene Sicherheitsbehälter weist eine Kondensationskammer, eine Druckkammer und einen im oberen Bereich der Druckkammer angeordneten Gebäudekondensator auf, wobei ferner ein Ableitrohr vorgesehen ist, das den oberen Bereich der Druckkammer mit der Kondensationskammer strömungstechnisch verbindet, um die nicht-kondensierbaren Gase gezielt und auf direktem Weg aus dem oberen Bereich der Druckkammer in die Kondensationskammer abzuleiten.

Herkömmliche Kondensationsrohre bestehen im wesentlichen aus einem vertikal verlaufenden Rohr, dessen oberes Ende mit der Druckkammer verbunden ist und dessen unteres Ende in eine Kühlflüssigkeit in der Kondensationskammer eintaucht. Dabei haben die Kondensationsrohre in der Regel einen Durchmesser von etwa 400 bis 600 mm und sind an ihrem unteren Ende im wesentlichen senkrecht zur Rohrachse abgeschnitten. Bei dieser herkömmlichen Konstruktion kommt es insbesondere bei großen Leckquerschnitten zu starken Belastungen des Bodens sowie der Seitenwände der Kondensationskammer durch einen Wasseraufwurf bei der anfänglichen Überströmung von Luft bzw. Stickstoff sowie durch das sogenannte "Chugging" gegen Ende der Überströmphase. Die Druckamplituden können beim Chugging mehrere bar betragen, so dass die durch Chugging verursachten Druckbelastungen für die Gebäudestruktur des Sicherheitsbehälters bestimmend werden können.

Der vorliegenden Erfindung liegt deshalb die Aufgabe zugrunde, einen Sicherheitsbehälter einer Kernkraftanlage weiterzuentwickeln, bei dem die Druckbelastungen auf den Boden und die Wände der Kondensationskammer im Falle eines Störfalls deutlich verringert sind.

Diese Aufgabe wird erfindungsgemäß dadurch gelöst, dass das untere Ende des vertikal verlaufenden Kondensationsrohres einen im eine Ausströmdüse mündenden Krümmer und aufweist, wobei der Krümmer einen Krümmungswinkel derart aufweist, dass das untere Ende des Krümmers schräg gegenüber der Vertikalen in die Kühlflüssigkeit in der Kondensationskammer eintaucht und wobei die Ausströmdüse des Kondensationsrohres durch ein Rohrstück gebildet, dessen dem Boden der Kondensationskammer zugewandte Seite länger als die dem Boden der Kondensationskammer abgewandten Seite ist.

Die Erfindung geht dabei von der Überlegung aus, dass während des Wasseraufwurfs bei der anfänglichen Überströmung von Luft bzw. Stickstoff mit deutlich niedrigeren Druckbelastungen auf den Boden und die Wände der Kondensationskammer zu rechnen ist, da die austretende Luft wegen der weitgehend horizontalen Ausströmung aus der erfindungsgemäß ausgebildeten Ausströmdüse auf eine wesentlich größere Grundfläche verteilt wird. Beim Auftreten von Chugging, d.h. bei dem Ausströmen nur geringer Dampfmassenströme und der Dampfblasenbildung in der Kondensationskammer, sind die dynamischen Druckbelastungen der Kondensationskammerwände wesentlich geringer, da die Abströmfläche aus der Ausströmdüse überwiegend von der Kühlflüssigkeit verschlossen ist, während bei der herkömmlichen Ausführungsform immer der volle Rohrquerschnitt freigelegt wurde. Von den Erfindern durchgeführte Tests haben bestätigt, dass sich die Druckbelastungen von Boden und Wänden der Kondensationskammer im Vergleich zu herkömmlichen Konstruktionen der Kondensationsrohre wesentlich verringerten.

So wurd die lokale Mischungszone von Dampf und Wasser, in der beim Chugging durch den Blasenkollaps die höchsten Drucktransienten entstehen, gegenüber dem Boden der Kondensationskammer abgeschirmt wird. Außerdem beträgt der Krümmerwinkel des Krümmers vorzugsweise zwischen etwa 70° und etwa 85°, bevorzugt etwa 82°, so dass das untere Ende des Krümmers schrägt nach unten geneigt in die Kühlflüssigkeit in der Kondensationskammer eintaucht.

In einer weiteren Ausgestaltung der Erfindung ist der wesentliche Teil des Kondensationsrohres in der Wand der Kondensationskammer eingebettet. Die Kondensationskammerwand kann so alle in dem Kondensationsrohr auftretenden Kräfte aufnehmen und einen zusätzlichen Schutz bei einem möglichen Bruch eines Kondensationsrohres gewährleisten. Außerdem werden hierdurch die zum Teil sehr aufwändigen Haltekonstruktionen für die herkömmlicherweise frei in der Kondensationskammer angebrachten Kondensationsrohre vermieden.

Die mit der Erfindung erzielten Vorteile bestehen insbesondere darin, dass eine völlig neue Ausströmgeometrie des Kondensationsrohres vorgesehen wird, welche zu wesentlich günstigeren Ergebnissen hinsichtlich der auftretenden Druckbelastungen von Boden und Wänden der Kondensationskammer führt. Durch das schräg in die Kühlflüssigkeit in der Kondensationskammer eintauchende Kondensationsrohr mit der speziell ausgebildeten Ausströmdüse entsteht eine weitgehend horizontale Ausströmung auf eine wesentlich größere Grundfläche und die Abströmfläche ist überwiegend von der Kühlflüssigkeit verschlossen. Auf diese Weise sind bei einem Störfall in dem Siedewasserreaktor sowohl bei dem anfänglichen Wasseraufwurf als auch bei dem Chugging deutliche niedrigere Druckbelastungen auf die Wände und den Boden der Kondensationskammer vorhanden.

Ein bevorzugtes Ausführungsbeispiel der Erfindung wird nachfolgend anhand der beiliegenden Zeichnungen näher erläutert. Darin zeigen:
- Fig.1: eine stark vereinfachte und schematische Querschnittsanschnitts durch einen Sicherheitsbehälter eines Siedewasserreaktors gemäß der vorliegenden Erfindung;
- Fig. 2: eine vergrößerte Detailansicht der Kondensationskammer und des Kondensationsrohres des Sicherheitsbehälters von Fig. 1 gemäß der Erfindung;
- Fig. 3A: eine graphische Darstellung von Messergebnissen der Druckbelastung am Boden der Kondensationskammer bei einem Störfall für ein Kondensationsrohr gemäß der Erfindung; und
- Fig. 3B: eine graphische Darstellung der Druckbelastung am Boden der Kondensationskammer in einem Störfall für ein herkömmliches Kondensationsrohr.

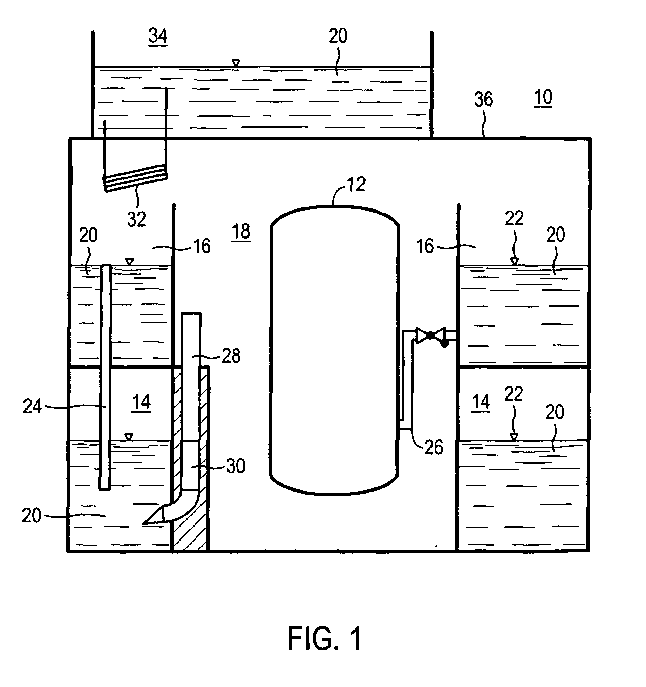

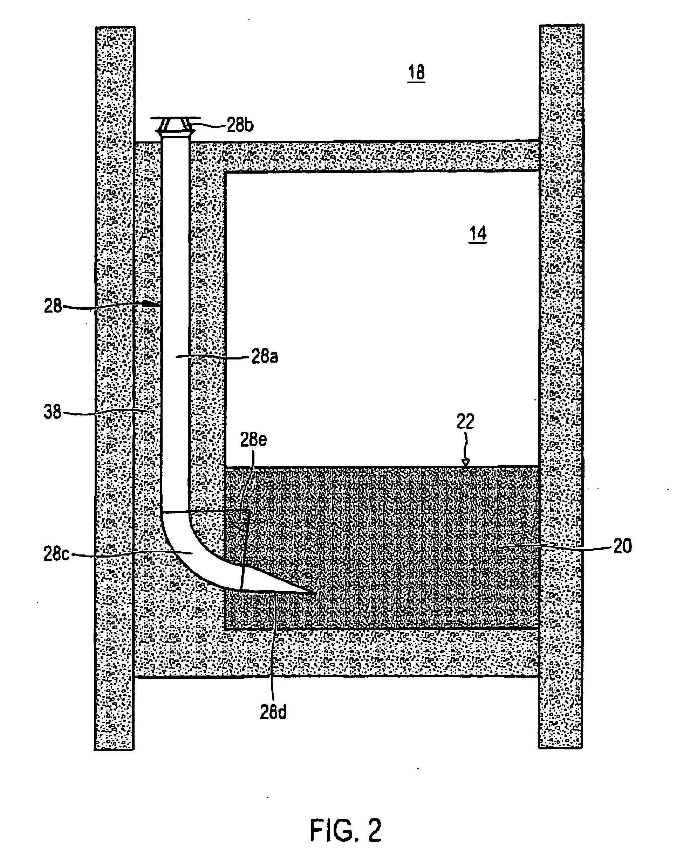

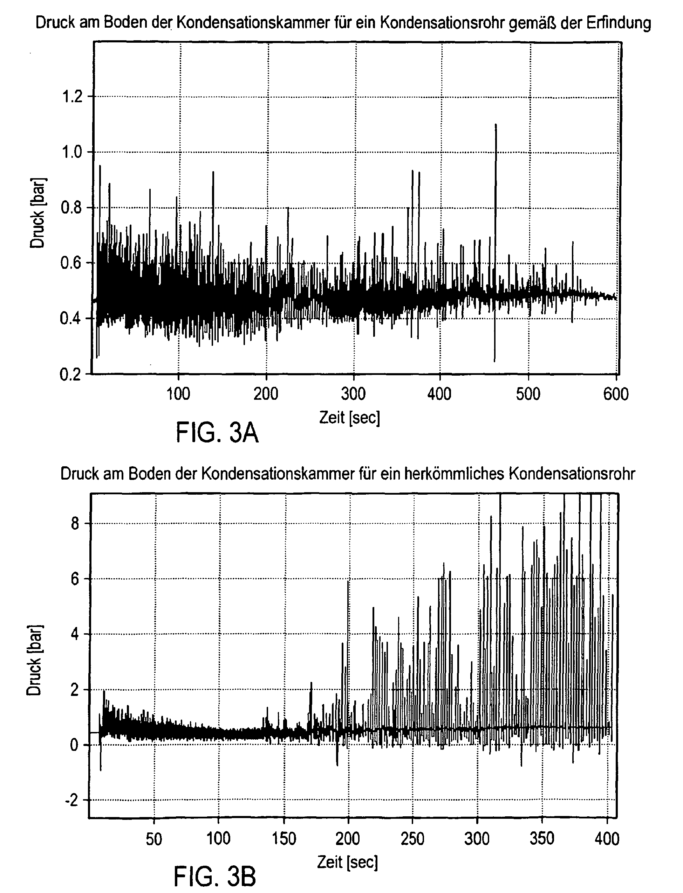

Anhand der Fig. 1 und 2 wird zunächst der Aufbau eines Sicherheitsbehälters gemäß einem bevorzugten Ausführungsbeispiel der Erfindung erläutert. Anschließend wird anhand der Fig. 3A und 3B die Druckbelastung am Boden der Kondensationskammer bei Verwendung eines Kondensationsrohres gemäß der Erfindung mit derjenigen bei der Verwendung eines herkömmlichen Kondensationsrohres verglichen.

Gemäß Fig. 1 ist zentral in einem geschlossenen Sicherheitsbehälter 10 ein Reaktordruckbehälter 12 angeordnet. Seitlich neben dem Reaktordruckbehälter 12 sind in dem Sicherheitsbehälter 10 eine Kondensationskammer 14 und ein darüber angeordnetes Flutbecken 16 vorgesehen. Das Flutbecken 16 ist zum Innenraum des Sicherheitsbehälters 10 nach oben hin offen. Der Innenraum wird auch als Druckkammer 18 bezeichnet und bildet mit dem Flutbecken 16 einen gemeinsamen Druckraum.

Die Kondensationskammer 14 und das Flutbecken 16 sind jeweils teilweise mit einer Kühlflüssigkeit 20, insbesondere Wasser, bis zu einem Füllstandsniveau 22 gefüllt. Das maximale Füllstandsniveau 22 in dem Flutbecken 16 ist durch das obere Ende eines Überlaufrohres 24 bestimmt. Das Überlaufrohr 24 verbindet das Flutbecken 16 mit der Kondensationskammer 14 und mündet in die Kühlflüssigkeit 20 der Kondensationskammer 14, so dass bei einer Überschreitung des maximalen Füllstandsniveaus 22 die Kühlflüssigkeit 20 vom Flutbecken 16 in die Kondensationskammer 14 abströmt. Das Flutbecken 16 ist weiterhin über eine Flutleitung 26 mit dem Reaktordruckbehälter 12 verbunden und kann diesen im Notfall mit ausreichend Kühlflüssigkeit 20 versorgen.

Die Kondensationskammer 14 ist gegenüber der Druckkammer 18 weitgehend abgeschlossen. Sie steht lediglich über ein oder mehrere Kondensationsrohr 28 mit der Druckkammer 18 in Verbindung. Das Kondensationsrohr 28 taucht in die Kühlflüssigkeit 20 in der Kondensationskammer 14 ein, so dass zwischen der Kondensationskammer 14 und der Druckkammer 18 kein Gasaustausch stattfindet. Das Kondensationsrohr 28 ist im Normalfall durch eine Wassersäule 30 im Kondensationsrohr 28 verschlossen; lediglich bei einem Störfall, wenn der Druck in der Druckkammer 18 ansteigt, strömt über das Kondensationsrohr 28 Dampf zum Kondensieren in die Kondensationskammer 14. Der genaue Aufbau und die Funktionsweise des Kondensationsrohres 28 werden später anhand von Fig. 2 näher erläutert.

In der linken Bildhälfte von Fig. 1 ist im oberen Bereich des Sicherheitsbehälters 10 und damit im oberen Bereich der Druckkammer 18 ein Gebäudekondensator 32 angeordnet. Der Gebäudekondensator 32 ist als Wärmetauscher mit Wärmetauscherrohren ausgestattet und steht mit einem Kühlbecken 34 strömungstechnisch in Verbindung, das außerhalb des Sicherheitsbehälters 10 auf dessen Dekkel 36 angeordnet ist. Der Gebäudekondensator 32 nimmt die Wärme aus seiner Umgebung innerhalb des Sicherheitsbehälters 10 auf und leitet sie an das Kühlbecken 34 weiter, wodurch Wärme aus dem Sicherheitsbehälter 10 in die äußere Umgebung abgegeben werden kann.

Bei einem Störfall, beispielsweise bei einem Bruch einer Dampfleitung im Sicherheitsbehälter 10 und dem damit verbundenen Dampfaustritt oder bei einem Kühlmittelverlust, steigen die Temperatur und der Druck im Sicherheitsbehälter 10 an. Über verschiedene Notkühleinrichtungen, von denen in Fig. 1 lediglich der Gebäudekondensator 32 und das Flutbecken 16 mit zugehöriger Flutleitung 26 gezeigt sind, wird gewährleistet, dass der Störfall-Enddruck im Sicherheitsbehälter 10 einen zulässigen Grenzwert nicht überschreitet. Dies wird in erster Linie durch Kühlen und Auskondensieren des Dampfes erzielt. Eine wichtige Rolle hierbei spielt der Gebäudekondensator 32, mit dem Wärme aus dem Sicherheitsbehälter 10 nach außen abgeführt werden kann.

Im Verlaufe eines Störfalls werden unter Umständen nicht-kondensierbare Gase, wie beispielsweise Wasserstoff oder Inertgase wie Luft oder Stickstoff, freigesetzt, die sich im oberen Bereich des Sicherheitsbehälters 10, d.h. im oberen Bereich der Druckkammer 18 anreichern. Die nicht-kondensierbaren Gase sammeln sich im oberen Bereich der Druckkammer an und führen zu einer Erhöhung des Drucks im Sicherheitsbehälter 10. Bei Erreichen eines bestimmten Drucks in der Druckkammer 18 kann der Dampf mit den nicht-kondensierbaren Gasen durch das Kondensationsrohr 28 den Druck der Wassersäule 30 im Kondensationsrohr 28 überwinden und in die Kondensationskammer 24 strömen. Der mitgeführte Dampf wird in der Kondensationskammer 14 abgekühlt und auskondensiert, während die nicht-kondensierbaren Gase in der Kondensationskammer 14 verbleiben.

Prinzipiell beeinträchtigen die nicht-kondensierbaren Gase den Wirkungsgrad des Gebäudekondensators 32, indem sie die Wärmetauschfähigkeit des Gebäudekondensators 32 wesentlich verringern. Bei Anwesenheit von nicht-kondensierbaren Gasen kann der Gebäudekondensator 32 wesentlich weniger Wärme pro Zeitund Flächeneinheit aus dem Dampf an das Kühlbecken 34 abführen als bei Abwesenheit der nicht-kondensierbaren Gase. Da diese nicht-kondensierbaren Gase durch das Kondensationsrohr 28 aus der Umgebung des Gebäudekondensators 32 abgeleitet werden, kann der Gebäudekondensator 32 für Sattdampf ausgelegt werden. Er benötigt deshalb keine großen und speziell gestalteten Wärmetauschflächen, die im Falle der Anwesenheit von nicht-kondensierbaren Gasen zwingend erforderlich wären, um ausreichend Wärme abführen zu können. Der Gebäudekondensator 32 kann daher einfacher, kompakter und damit günstiger ausgestaltet werden.

Es werden nun anhand der schematischen Darstellung von Fig. 2 der Aufbau und die Funktionsweise des in die Kondensationskammer 14 führenden Kondensationsrohres 28 gemäß der vorliegenden Erfindung näher beschrieben.

Bei einem Störfall und dem damit verbundenen erhöhten Druck in der Druckkammer 18 strömt Dampf aus der Druckkammer 18 mit den nicht-kondensierbaren Gasen durch das Kondensationsrohr 28 in die Kondensationskammer 14. Wie in der graphischen Darstellung von Fig. 3B dargestellt, treten hierbei im Falle eines herkömmlichen Kondensationsrohres, d.h. eines im wesentlichen vertikal verlaufenden Kondensationsrohres mit einem senkrecht zur Rohrachse abgeschnittenen unteren Ende, bei dem Wasseraufwurf bei der anfänglichen Überströmung von Luft Drücke von bis zu 2 bar und bei dem sogenannten "Chugging", d.h. der Dampfblasenbildung in der Kondensationskammer 14 gegen Ende der Überströmphase Drücke von bis zu 10 bar auf den Boden und die Wände der Kondensationskammer 14 auf. Um diese hohen Druckbelastungen auf die Wände und den Boden der Kondensationskammer 14 zu verringern, ist die Kondensationskammer 28 des erfindungsgemäßen Sicherheitsbehälters 10 wie folgt aufgebaut.

Das Kondensationsrohr 28 weist einen im wesentlichen vertikal verlaufenden Hauptabschnitt 28a auf, an dessen oberen Ende eine Einströmöffnung 28b innerhalb der Druckkammer 18 vorgesehen ist. Am unteren Ende des vertikalen Abschnitts 28a des Kondensationsrohres 28 schließt sich ein Krümmer 28c an. Der Krümmer 28c ist im wesentlichen ein gebogener Rohrabschnitt mit einem Krümmerwinkel 28e bevorzugt etwa zwischen 70° und 85°, besonders bevorzugt etwa 82°. Durch diesen Krümmer 28c ragt das Kondensationsrohr 28 unterhalb des Füllstandsniveaus der Kühlflüssigkeit 20 in der Kondensationskammer 14 mit einer leichten Neigung nach unten in die Kühlflüssigkeit. Am unteren Ende des Krümmers 28c ist eine Ausströmdüse 28d vorgesehen. Die Ausströmdüse 28d ist in dem gezeigten Ausführungsbeispiel aus einem geraden Rohrstück gefertigt, dessen Länge auf der dem Boden der Kondensationskammer 14 zugewandten Seite deutlich länger als diejenige auf der dem Boden abgewandten Seite ist.

Durch diese besondere Ausbildung des Kondensationsrohres 28 mit Krümmer 28c und spezieller Ausströmdüse 28d ist bei einem Störfall sowohl während des anfänglichen Wasseraufwurfs als auch während des anschließenden Chuggings mit deutlich niedrigeren Druckbelastungen auf den Boden und die Wände der Kondensationskammer 14 zu rechnen. Dies wird auch durch Versuche bestätigt, deren Ergebnisse in der graphischen Darstellung von Fig. 3A veranschaulicht sind. Die auftretenden Druckbelastungen liegen über den gesamten Zeitraum in einem Bereich von unterhalb etwa 1 bar, d.h. deutlich niedriger als die Druckbelastungen von anfänglich maximal 2 bar und bis zu 10 bar gegen Ende im Fall des herkömmlichen Kondensationsrohres (siehe Fig. 3B).

Im Gegensatz zu herkömmlichen Sicherheitsbehältern 10 ist das Kondensationsrohr 28 auch nicht durch entsprechende Haltekonstruktionen in der Kondensationskammer gehalten. Statt dessen ist ein wesentlicher Teil des Kondensationsrohres 28, insbesondere der vertikal verlaufende Hauptabschnitt 28a und ein Großteil des Krümmers 28c, in der Betonwand der Kondensationskammer eingebettet. Die Wand 38 der Kondensationskammer 14 nimmt hierdurch alle in dem Kondensationsrohr auftretenden Kräfte auf und bietet einen zusätzlichen Schutz bei einem eventuellen Bruch eines Kondensationsrohres 28.

Insgesamt stellt die Erfindung einen Sicherheitsbehälter 10 einer Kernkraftanlage bereit, der ein Kondensationsrohr aufweist, das deutlich geringere Druckbelastungen auf den Boden und die Wände der Kondensationskammer als ein herkömmliches Kondensationsrohr bewirkt. Hierdurch wird die Sicherheit des Sicherheitsbehälters erhöht und die Anforderungen an die Gebäudestruktur des Sicherheitsbehälters werden geringer.

Während die vorliegende Erfindung oben anhand eines bevorzugten Ausführungsbeispiels beschrieben wurde, ist es für den Fachmann selbstverständlich, verschiedene Abwandlungen daran vorzunehmen, die noch im durch die anhängenden Ansprüche definierten Schutzumfang der vorliegenden Erfindung liegen. Insbesondere ist die Ausbildung der Ausströmdüse nicht auf die oben beschriebene Form eines geraden Rohrstücks mit unterschiedlich langen Seiten beschränkt. Entscheidend bei der Ausbildung der Ausströmdüse ist lediglich die durch die Ausströmdüse erzielte Ausströmwirkung der durch die Kondensationsrohre strömenden Medien. Ferner können die Kondensationsrohre aus dem vertikalen Hauptabschnitt, dem Krümmer und der Ausströmdüse sowohl einteilig ausgebildet sein als auch aus mehreren separat gefertigten und anschließend miteinander dicht verbundenen Bauteilen bestehen.

### Bezugszeichenliste

- 10: Sicherheitsbehälter
- 12: Reaktordruckbehälter
- 14: Kondensationskammer
- 16: Flutbecken
- 18: Druckkammer
- 20: Kühlflüssigkeit
- 22: Füllstandsniveau
- 24: Überlaufrohr
- 26: Flutleitung
- 28: Kondensationsrohr
- 28a: vertikaler Hauptabschnitt von 28
- 28b: Einströmöffnung von 28
- 28c: Krümmer
- 28d: Ausströmdüse
- 28e: Krümmerwinkel
- 30: Wassersäule
- 32: Gebäudekondensator
- 34: Kühlbecken
- 36: Deckel von 10
- 38: Betonwand von 14

## Patentansprüche

1. Sicherheitsbehälter (10) einer Kernkraftanlage, mit einer Druckkammer (18), einer Kondensationskammer (14) und einem im wesentlichen vertikal verlaufenden Kondensationsrohr (28), dessen oberes Ende mit der Druckkammer verbunden ist und dessen unteres Ende in eine Kühlflüssigkeit (20) in der Kondensationskammer eintaucht,
**dadurch gekennzeichnet,**
**dass** das untere Ende des Kondensationsrohres (28) einen in eine Ausströmdüse (28d) mündenden Krümmer (28c) aufweist,
wobei der Krümmer (28c) einen Krümmerwinkel (28e) derart aufweist, dass das untere Ende des Krümmers schräg gegenüber der Vertikalen in die Kühlflüssigkeit (20) in der Kondensationskammer (14) eintaucht, und
wobei die Ausströmdüse (28d) des Kondensationsrohres (28) durch ein Rohrstück gebildet ist, dessen dem Boden der Kondensationskammer (14) zugewandte Seite länger als die dem Boden der Kondensationskammer abgewandte Seite ist.

2. Sicherheitsbehälter nach Anspruch 1, bei welchem der Krümmerwinkel (28e) des Krümmers (2Bc) des Kondensationsrohres (28) zwischen etwa 70° und etwa 85° beträgt, so dass das untere Ende des Krümmers schräg nach unten geneigt in die Kühlflüssigkeit (20) in der Kondensationskammer (14) eintaucht.

3. Sicherheitsbehälter nach Anspruch 2. bei welchem der Krümmerwinkel (28e) des Krümmers (28c) etwa 82° beträgt.

4. Sicherheitsbehälter nach einem der Ansprüche 1 bis 3, bei welchem ein wesentlicher Teil des Kondensationsrohres (28) in der Wand (38) der Kondensationskammer (14) eingebettet ist.

## Claims

1. A containment (10) of a nuclear power plant, having a pressure chamber (18), a condensation chamber (14) and a condensation tube (28) which extends substantially in vertical direction and whose upper end is connected with the pressure chamber and whose lower end immerges into a cooling fluid (20) in the condensation chamber,
**characterized in**
**that** the lower end of the condensation tube (28) includes a bend (28c) running into an outlet nozzle (28d),
the bend (28c) having such a bend angle (28d) that the lower end of the bend immerges into the cooling fluid (20) in the condensation chamber (14) obliquely opposite the vertical line, and
the outlet nozzle (28d) of the condensation tube (28) being formed by a tube piece whose side facing towards the bottom of the condensation chamber (14) is longer that its side facing away from the bottom of the condensation chamber.

2. The containment according to claim 1, wherein the bend angle (28e) of the bend (28c) of the condensation tube (28) is between approximately 70° and approximately 85°, so that the lower end of the bend immerges into the cooling fluid (20) in the condensation chamber (14) in an obliquely downwards inclined manner.

3. The containment according to claim 1, wherein the bend angle (28e) of the bend (28c) is approximately 82°.

4. The containment according to any of claims 1 to 3, wherein a substantial part of the condensation tube (28) is embedded in the wall (38) of the condensation chamber (14).

## Revendications

1. Confinement (10) d'une centrale nucléaire, ayant une chambre de compression (18), une chambre de condensation (14) et un tuyau de condensation (28) qui s'étend essentiellement en direction verticale et dont le bout supérieur est relié avec la chambre de compression et dont le bout inférieur s'immerge dans un fluide de refroidissement (20) dans la chambre de condensation,
**caractérisé en ce**
**que** le bout inférieur du tuyau de condensation (28) est muni d'un coude (28c) débouchant dans une buse de sortie (28d),
le coude (28c) ayant un angle de coude (28d) tel que le bout inférieur du coude s'immerge dans le fluide de refroidissement (20) dans la chambre de condensation (14) obliquement en face de la ligne verticale, et
la buse de sortie (28d) du tuyau de condensation (28) étant formée par une pièce de tuyau dont le côté en regard du fond de la chambre de condensation (14) est plus long que le côté opposé au fond de la chambre de condensation.

2. Confinement selon la revendication 1, dans lequel l'angle de coude (28e) du coude (28c) du tuyau de condensation (28) est entre d'environ 70° et d'environ 85°, de façon que le bout inférieur du coude s'immerge dans le fluide de refroidissement (20) dans la chambre de condensation (14) d'une manière inclinée obliquement vers le bas.

3. Confinement selon la revendication 1, dans lequel l'angle de coude (28e) du coude (28c) est d'environ 82°.

4. Confinement selon l'une quelconque des revendications 1 à 3, dans lequel une partie essentielle du tuyau de condensation (28) est encastrée dans la paroi (38) de la chambre de condensation (14).
